# EUROPEAN PATENT APPLICATION

(11) **EP 4 181 072 A1**
(43) Date of publication of application: **17.05.2023**
(21) Application number: 22161662.6
(22) Date of filing: 11.03.2022
(51) Int. Cl.: G06T 13/40

(54) **METHOD OF GENERATING FACIAL EXPRESSION AND THREEE-DIMENSIONAL (3D) GRAPHIC INTERFACE DEVICE USING THE SAME**

(30) Priority: 10.11.2021 KR 20210154149; 07.12.2021 KR 20210174058
(71) Applicant: EVR Studio Co., Ltd., Seoul 06626 (KR)
(72) Inventor: PARK, Jae Wook, 04780 Seoul (KR)
(74) Representative: Fabry, Bernd

(57) **Abstract**

A method of generating a facial expression and a three-dimensional (3D) graphic interface device therefor according to an exemplary embodiment of the present disclosure are provided. The method of generating a facial expression includes generating two or more component shapes corresponding to each action unit by using at least one action unit; generating a first component morphing set corresponding to a first action unit among the at least one action unit and a second component morphing set corresponding to a second action unit among the at least one action unit; and generating a result shape by combining at least a portion of the first component morphing set and at least a portion of the second component morphing set.

## Description

### CROSS-REFERENCE TO RELATED APPLICATIONS

This application claims the priority benefit of Korean Patent Application No. 10-2021-0154149 filed on November 10, 2021, and Korean Patent Application No. 10-2021-0174058 filed on December 7, 2021, with the Korean Intellectual Property Office, the disclosures of which are incorporated herein by reference.

### BACKGROUND

### Technical Field

The present disclosure relates to a method of generating a facial expression and a three-dimensional (3D) graphic interface device using the same.

### Background Art

In general, three-dimensional (3D) graphic technology is a technology for creating realistic 3D objects and visualizing them, and is used in various fields such as the fields of broadcasting, games, movies, medical care and the like. These 3D objects are designed by manufacturers using a 3D graphic tool such as a 3D modeling software or application. Recently, in the graphic field, various methods are being developed to reduce time and resources required to manufacture a 3D object while representing a human as a realistic and actual 3D object.

In particular, to generate various facial expressions of a 3D face model which models a human, a manufacturer generates a morph target (a blend shape target) corresponding to each human facial expression, and uses the generated morph target alone or morphs two or more morph targets to generate a desired facial expression.

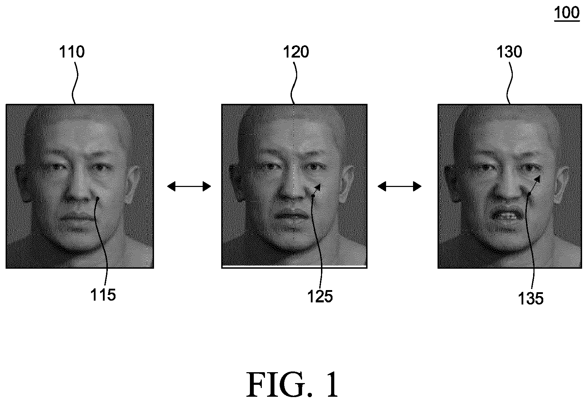

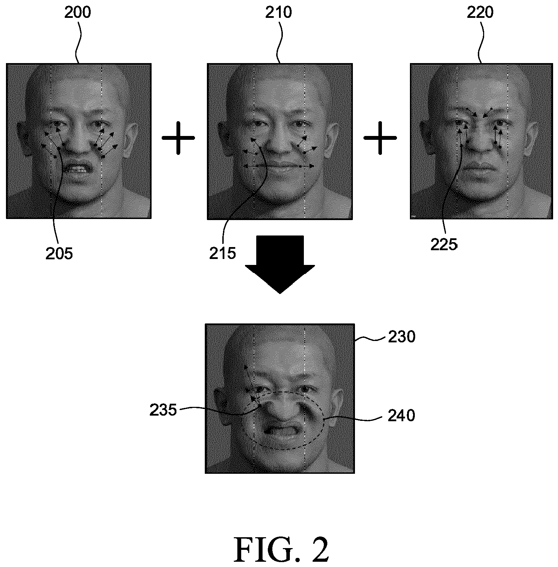

FIGS. 1 and 2 are exemplary views illustrating morphings used in the prior art and imitations thereof. Specifically, FIG. 1 is an exemplary view illustrating a morphing used in the prior art.

Referring to FIG. 1, a morphing 100 may show various facial expressions between a first facial model 110 of a first facial expression (e.g., expressionless) and a third face model 130 corresponding to a third facial expression (e.g., a target expression) in response to a specific action unit. A change from the first facial expression to the third facial expression may be performed within a range in which facial muscles can move. For example, linear interpolation or the like may be used to show a second facial model 120 corresponding to a second facial expression between the first facial expression and the third facial expression.

Specifically, any one point (hereinafter, referred to as a 'second point 125') constituting muscles around the nose in the second face model 120 may be estimated through linear interpolation between a first point 115 corresponding to the second point 125 in the first face model 110 and a third point 135 corresponding to the first point 115 and the second point 125 in the third face model 130. For example, the second point 125 may have a movement value calculated by using linear interpolation between a movement value (e.g., a vector value) of the first point 115 and a movement value of the third point 135, and various calculation methods for estimating a specific movement value between the first point 115 and the third point 135 may be used.

However, since movements of facial muscles are in correlation according to various facial expressions, when generating a new facial expression by combining two or more morphings, an irregular and unrealistic facial expression may be caused by a geometric structure of the facial muscles in association with facial expressions of each morphing. Hereinafter, a case in which two or more morphings are combined will be described in detail with reference to FIG. 2.

FIG. 2 is an exemplary view illustrating a method of generating a new facial expression by morphing two or more action units in the prior art. In the presented exemplary embodiment, a case in which three morphings are combined will be described.

Referring to FIG. 2, a first morphing 200 related to a first action unit, a second morphing 210 related to a second action unit, and a third morphing 220 related to a third action unit are provided.

For example, the first morphing 200 may correspond to a first facial expression in which, by movements of zygomaticus minor muscles, zygomaticus major muscles, and/or lifter muscles of an upper lip, muscles around the nose are raised, resulting in deep wrinkles, and the upper lip is raised to reveal the teeth. The second morphing 210 may correspond to a second facial expression in which, by movements of zygomaticus minor muscles, zygomaticus major muscles, and/or risorius muscles, cheek muscles are raised and lips are stretched in both directions. The third morphing 220 may correspond to a third facial expression in which, by movements of corrugator supercilii muscles, zygomaticus minor muscles, and/or zygomaticus major muscles, cheek muscles are raised, and a middle of the forehead, a root of the noise and the like are wrinkled.

When the first morphing 200, the second morphing 210, and the third morphing 220 are combined, respective movement values of a plurality of points constituting facial muscles of the first morphing 200, a plurality of points constituting facial muscles of the second morphing 210, and a plurality of points constituting facial muscles of the third morphing 220 are calculated, so that a fourth morphing 230 of a new facial expression is formed.

In the fourth morphing 230 formed in this manner, each of a plurality of points constituting facial muscles has a calculated movement value of each of the plurality of points constituting the facial muscles of the first morphing 200, the second morphing 210, and the third morphing 220. Accordingly, in a portion corresponding to reference numeral 240 of FIG. 2 in the fourth face model 230, an abnormal and inappropriate facial expression may appear in which movements of facial muscles capable of being expressed in each blend image by a combination of the first morphing 200, the second morphing 210, and the third morphing 220 are far out of a range in which actual facial muscles can move.

It is assumed that any one point corresponding to the muscles around the nose corresponds to a first point 205 in the first morphing 200, corresponds to a second point 215 in the second morphing 210, and corresponds to a third point 225 in the third morphing 220. In this case, since a fourth point 235 of the fourth morphing 230 has a movement value calculated by adding the movement values of each of the first point 205, the second point 215, and the third point 225, the fourth point 235 may be expressed at a position that is far out of a movable range of actual facial muscles.

In this manner, when two or more morphings are combined to thereby generate a result shape in which an abnormal facial expression is expressed by a geometric structure of each morphing, a corrective shape is conventionally provided to correct it. In general, when two or more morphings are used, the corrective shape can be applied to the result shape in which an abnormal facial expression is expressed in order to remove interference caused by the geometric structure.

However, even if such a technique is used, an abnormal facial expression may not be completely corrected, and if the correction is not performed smoothly, it is inconvenient that a manufacturer has to correct result shapes one by one using a manufacture tool. Since the manufacturer has to manufacture shapes of a corresponding face one by one based on subjective judgment, an inaccurate facial expression is not improved or it takes a lot of time to manufacture each shape even if the inaccurate facial expression is improved.

In addition, when expressing a relatively complex face that requires various facial expression changes, a large number of corrective shapes are required to correct it, and when a large number of corrective shapes are applied, interference may occur due to these corrective shapes, and computational resources required due to the large number of corrective shapes increase. In addition, when using an existing correction technology, it is necessary to manually generate about more than 400 corrective shapes for combinations of morphings, which takes a very long time (approximately 1-2 years) and increases resources accordingly.

### SUMMARY

The inventors of the present disclosure have recognized the fact that when a facial expression is generated by morphing two or more action units, interference is caused by a geometric facial muscle structure of each action unit, thereby generating an abnormal and inaccurate facial expression.

In addition, the inventors of the present disclosure have recognized that when using an existing correction technology that applies a corrective shape to correct an abnormal and inaccurate facial expression, since the manufacturer has to manufacture shapes of a corresponding face one by one based on subjective judgment, an inaccurate facial expression is not improved or it takes a lot of time to manufacture each shape even if the inaccurate facial expression is improved.

In addition, since the inventors of the present disclosure have recognized that when using an existing correction technology, it is necessary to manually generate about 400 or more corrective shapes for combinations of action units, which takes a very long time (approximately 1-2 years) and increases resources accordingly.

Accordingly, an object of the present disclosure is to provide a method of generating a facial expression and a three-dimensional (3D) graphic interface device therefor.

Specifically, an object of the present disclosure is to provide a method of promptly generating a natural facial expression while preventing interference that may occur when using the prior art for generating a facial expression by morphing two or more action units (interference caused by a geometric facial muscle structure of each action unit) and a three-dimensional (3D) graphic interface device for the method.

In addition, an object of the present disclosure is to provide a method of promptly generating normal, realistic, and natural facial expressions corresponding to various facial expressions without using corrective shapes used in the prior art, and a three-dimensional (3D) graphic interface device for the method.

It will be appreciated by those skilled in the art that objects of the present disclosure are not limited to those described above and other objects that are not described above will be more clearly understood from the following descriptions.

A method of generating a facial expression and a three-dimensional (3D) graphic interface device therefor are provided in order to solve the above-described problems.

A method of generating a facial expression according to an exemplary embodiment of the present disclosure includes generating two or more component shapes corresponding to each action unit by using at least one action unit; generating a first component morphing set corresponding to a first action unit among the at least one action unit and a second component morphing set corresponding to a second action unit among the at least one action unit; and generating a result shape by combining at least a portion of the first component morphing set and at least a portion of the second component morphing set.

Each of the first component morphing set and the second component morphing set according to an exemplary embodiment of the present disclosure may include two or more generated component shapes.

Each component morphing set according to an exemplary embodiment of the present disclosure may have a plurality of mesh regions composed of lines and vertices based on a human facial muscle structure.

The generating of the result shape according to an exemplary embodiment of the present disclosure may be combining a first set of component shapes corresponding to at least one component morphing of the first component morphing set and a second set of component shapes corresponding to at least one component morphing of the second component morphing set.

The combining of the first set of component shapes and the second set of component shapes according to an exemplary embodiment of the present disclosure includes: applying a preset first weight value to a parameter value of the first set of component shapes; applying a preset second weight value to a parameter value of the second set of component shapes; and calculating a result value by calculating a first weight parameter value that is the parameter value to which the first weight value is applied and a second weight parameter value that is the parameter value to which the second weight value is applied.

The generating of the result shape according to an exemplary embodiment of the present disclosure may include adjusting the calculated result value so as not to exceed a preset threshold value.

The adjusting of the calculated result value so as not to exceed the threshold value according to an exemplary embodiment of the present disclosure may include determining a ratio for adjusting the first weight parameter value based on a geometry regarding the first action unit; determining a ratio for adjusting the second weight parameter value based on a geometry regarding the second action unit; and adjusting each of the first weight parameter value and the second weight parameter value based on the determined ratio.

The determining of the ratio according to an exemplary embodiment of the present disclosure may include determining the first weight parameter value in consideration of at least one of a movement, a movement range, and a vector value of meshes constituting the geometry of the first action unit; and determining a ratio to which the second weight parameter value is applied in consideration of at least one of a movement, a movement range, and a vector value of meshes constituting the geometry of the second action unit.

A three-dimensional (3D) graphic interface device for generating a facial expression according to an exemplary embodiment of the present disclosure includes a storage unit configured to store at least one face model; and a control unit configured to be connected to the storage unit and generate a facial expression, and the control unit is configured to generate at least two or more component shapes corresponding to each action unit by using at least one action unit, generate a first component morphing set corresponding to a first action unit among the at least one action unit and a second component morphing set corresponding to a second action unit among the at least one action unit, and generate a result shape by combining at least a portion of the first component morphing set and at least a portion of the second component morphing set, wherein each of the first component morphing set and the second component morphing set includes two or more generated component shapes.

The control unit according to an exemplary embodiment of the present disclosure is configured to combine a first set of component shapes corresponding to at least one component morphing of the first component morphing set and a second set of component shapes corresponding to at least one component morphing of the second component morphing set.

The control unit according to an exemplary embodiment of the present disclosure is configured to calculate a result value by applying a preset first weight value to a parameter value of the first set of component shapes, applying a preset second weight value to a parameter value of the second set of component shapes, and calculating a first weight parameter value that is the parameter value to which the first weight value is applied and a second weight parameter value that is the parameter value to which the second weight value is applied, in order to combine the first set of component shapes and the second set of component shapes.

The control unit according to an exemplary embodiment of the present disclosure is configured to adjust the calculated result value so as not to exceed a preset threshold value.

The control unit according to an exemplary embodiment of the present disclosure is configured to determine a ratio for adjusting the first weight parameter value based on a geometry regarding the first action unit; determine a ratio for adjusting the second weight parameter value based on a geometry regarding the second action unit; and adjust each of the first weight parameter value and the second weight parameter value based on the determined ratio.

The control unit according to an exemplary embodiment of the present disclosure is configured to determine a ratio to which the first weight parameter value is applied in consideration of at least one of a movement, a movement range, and a vector value of meshes constituting the geometry of the first action unit, and determine a ratio to which the second weight parameter value is applied in consideration of at least one of a movement, a movement range, and a vector value of meshes constituting the geometry of the second action unit.

Details of other exemplary embodiments are included in the detailed description and drawings.

According to the present disclosure, by applying weights to morphings of component shapes corresponding to each action unit when combining two or more action units, a facial expression of combined action units is expressed within a movement range in which human facial muscles can move, so that interference caused by a geometric facial muscle structure of each of the two or more action units can be prevented.

In addition, since the present disclosure does not use a plurality of corrective shapes, there is no computational resource required due to a large number of corrective shapes, and thus time and resources required for generating facial expressions can be minimized.

In addition, the present disclosure can provide a method for generating a facial expression which is realistic, natural, and similar to an actual facial expression, and a three-dimensional (3D) graphic interface device.

Effects according to the present disclosure are not limited by the contents exemplified above, and more various effects are included in the present specification.

### BRIEF DESCRIPTION OF THE DRAWINGS

FIG. 1 is an exemplary view illustrating a morphing used in the prior art.
FIG. 2 is an exemplary view illustrating a method of generating a new facial expression by morphing two or more action units in the prior art.
FIG. 3 is a schematic diagram illustrating a three-dimensional (3D) graphic interface device for generating a facial expression according to an exemplary embodiment of the present disclosure.
FIG. 4, FIG. 5A, FIG. 5B, and FIG. 6 are exemplary views illustrating specific operations of generating a facial expression of a control unit according to an exemplary embodiment of the present disclosure.
FIG. 7 and FIG. 8 are exemplary views illustrating result shapes generated by combining morphings corresponding to two or more action units according to an exemplary embodiment of the present disclosure.
FIG. 9 is a flowchart illustrating a method of generating a facial expression according to an exemplary embodiment of the present disclosure.
FIG. 10 is an exemplary diagram illustrating an interface screen of a 3D graphic interface device for generating a result shape of a new facial expression by combining two or more component morphing sets according to an exemplary embodiment of the present disclosure.

### DETAILED DESCRIPTION OF EXEMPLARY EMBODIMENTS

Advantages and features of the present disclosure and methods to achieve them will become apparent from descriptions of exemplary embodiments herein below with reference to the accompanying drawings. However, the present disclosure is not limited to the exemplary embodiments disclosed herein but may be implemented in various different forms. The exemplary embodiments are provided to make the description of the present disclosure thorough and to fully convey the scope of the present disclosure to those skilled in the art. It is to be noted that the scope of the present disclosure is defined only by the claims. In connection with the description of drawings, the same or like reference numerals may be used for the same or like elements.

In the disclosure, expressions "have," "may have," "include" and "comprise," or "may include" and "may comprise" used herein indicate presence of corresponding features (for example, elements such as numeric values, functions, operations, or components) and do not exclude the presence of additional features.

In the disclosure, expressions "A or B," "at least one of A or/and B," or "one or more of A or/and B," and the like used herein may include any and all combinations of one or more of the associated listed items. For example, the "A or B," "at least one of A and B," or "at least one of A or B" may refer to all of case (1) where at least one A is included, case (2) where at least one B is included, or case (3) where both of at least one A and at least one B are included.

The expressions, such as "first," "second," and the like used herein, may refer to various elements of various exemplary embodiments of the present disclosure, but do not limit the order and/or priority of the elements. Furthermore, such expressions may be used to distinguish one element from another element. For example, "a first user device" and "a second user device" indicate different user devices regardless of the order or priority. For example, without departing from the scope of the present disclosure, a first element may be referred to as a second element, and similarly, a second element may also be referred to as a first element.

It will be understood that when an element (for example, a first element) is referred to as being "(operatively or communicatively) coupled with/to" or "connected to" another element (for example, a second element), it can be understood as being directly coupled with/to or connected to another element or coupled with/to or connected to another element via an intervening element (for example, a third element). On the other hand, when an element (for example, a first element) is referred to as being "directly coupled with/to" or "directly connected to" another element (for example, a second element), it should be understood that there is no intervening element (for example, a third element).

According to the situation, the expression "configured to (or set to)" used herein may be replaced with, for example, the expression "suitable for," "having the capacity to," "designed to," "adapted to," "made to," or "capable of". The term "configured to (or set to)" must not mean only "specifically designed to" in hardware. Instead, the expression "a device configured to" may mean that the device is "capable of operating together with another device or other components. For example, a "processor configured to (or set to) perform A, B, and C" may mean a dedicated processor (for example, an embedded processor) for performing a corresponding operation or a generic-purpose processor (for example, a central processing unit (CPU) or an application processor) which may perform corresponding operations by executing one or more software programs which are stored in a memory device.

Terms used in the present disclosure are used to describe specified exemplary embodiments of the present disclosure and are not intended to limit the scope of other exemplary embodiments. The terms of a singular form may include plural forms unless otherwise specified. All the terms used herein, which include technical or scientific terms, may have the same meaning that is generally understood by a person skilled in the art. It will be further understood that terms which are defined in a dictionary among terms used in the disclosure, can be interpreted as having the same or similar meanings as those in the relevant related art and should not be interpreted in an idealized or overly formal way, unless expressly defined in the present disclosure. In some cases, even in the case of terms which are defined in the specification, they cannot be interpreted to exclude exemplary embodiments of the present disclosure.

Features of various exemplary embodiments of the present disclosure may be partially or fully combined or coupled. As will be clearly appreciated by those skilled in the art, technically various interactions and operations are possible, and respective exemplary embodiments may be implemented independently of each other or may be implemented together in an associated relationship.

Hereinafter, in order to help understanding of the disclosures presented in the present specification, terms used in the present specification will be briefly summarized.

In the present specification, a facial action coding system (FACS) is a method of analyzing a human facial expression based on human's anatomical facial muscles, and includes an action unit and facial action descriptors.

In the present specification, the action unit refers to a basic unit of a facial expression which is formed by an individual facial muscle or a combination of a plurality of facial muscles. The facial expression may be formed by an action unit alone or by a combination of two or more action units.

In the present specification, the term 'morphing' (blend shapes) refers to a technique capable of generating a shape of a new facial expression through linear interpolation between a basic facial expression model (e.g., expressionless) and a model of another facial expression.

In the present specification, a geometry refers to a three-dimensional object represented as a mesh, which is a three-dimensional surface created through three-dimensional modeling using points, lines, and surfaces (polygons).

In the present specification, a model refers to a head object which is comprised of a geometry. This model has a basic facial expression, or each facial expression on the FACS.

In the present specification, a component shape is a model in which only a specific region expresses a specific facial expression in the basic facial expression model. One facial expression model may be divided into several component shapes, and its original facial expression model is obtained when all the divided component shapes are morphed.

Hereinafter, various exemplary embodiments of the present disclosure will be described in detail with reference to the accompanying drawings.

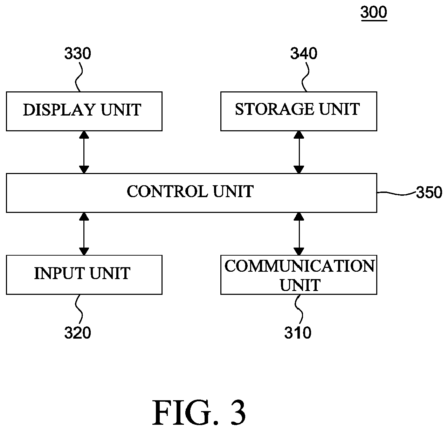

FIG. 3 is a schematic diagram illustrating a three-dimensional (3D) graphic interface device for generating a facial expression according to an exemplary embodiment of the present disclosure.

Referring to FIG. 3, a 3D graphic interface device 300 is a device which provides a 3D graphic interface for generating a facial expression based on a 3D face model (hereinafter, referred to as a 'face model'), and may include at least one of a personal computer (PC), a tablet PC, and/or a notebook computer. In various exemplary embodiments, a 3D graphic interface may be provided not only as a program, but also as a plug-in and an add-on which are applicable to a 3D graphic tool, an application, a web browser, a widget or the like, but is not limited thereto.

The 3D graphic interface device 300 may provide various interface screens for generating a facial expression using a face model, and the various interface screens may be interface screens which are related to a 3D graphic tool. For example, an interface screen for generating a facial expression may be an interface screen which is related to a plug-in and an add-on which are applied to a 3D graphic tool.

Specifically, the 3D graphic interface device 300 includes a communication unit 310, an input unit 320, a display unit 330, a storage unit 340, and a control unit 350.

The communication unit 310 connects the 3D graphic interface device 300 to an external device such that the 3D graphic interface device 300 communicates with the external device using wired/wireless communication.

The input unit 320 may include a mouse or keyboard which may receive a command or data to be used for a component (e.g., the control unit 350) of the 3D graphic interface device 300 from an outside (e.g., a user) of the 3D graphic interface device 300.

The display unit 330 may display various contents to the user. For example, the display unit 330 may display various interface screens for generating a facial expression using a face model.

The storage unit 340 may store various data used to generate facial expressions.

In various exemplary embodiments, the storage unit 340 may include at least one type of storage medium among a flash memory type, a hard disk type, a multimedia card micro type, a card type memory (e.g., an SD or XD memory or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The 3D graphic interface device 300 may operate in relation to a web storage which performs a storage function of the storage unit 340 on the Internet.

The control unit 350 is operatively connected to the communication unit 310, the input unit 320, the storage unit 340, and the display unit 330, and may perform various instructions for generating a facial expression using a face model.

In order to prevent an abnormal facial expression from being caused when two or more morphings are combined using the prior art, the control unit 350 of the 3D graphic interface device according to an exemplary embodiment of the present disclosure generates a facial expression by a method of generating component shapes which are obtained by dividing the action unit according to areas of respective facial muscles so that a new facial expression (for example, reference numeral 230) is expressed within a movement range in which human facial muscles can be movable; creating component morphing sets by morphing these component shapes to a basic facial expression; and then, combining a plurality of the component morphing sets.

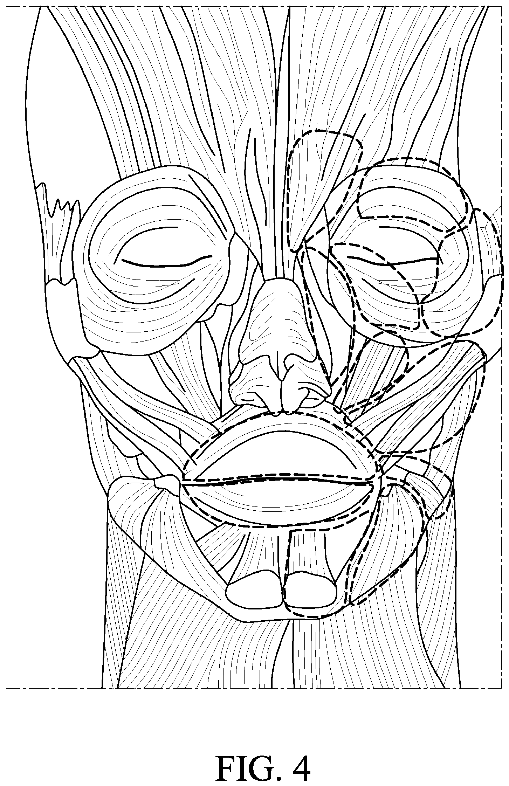

Hereinafter, operations of the control unit 350 described above will be described in detail with reference to FIGS. 4 to 6.

FIG. 4, FIG. 5A, FIG. 5B, and FIG. 6 are exemplary views illustrating specific operations of generating a facial expression of the control unit of the 3D graphic interface device according to an exemplary embodiment of the present disclosure.

Referring to FIG. 4, the control unit 350 generates a morph target corresponding to one action unit by using a face model which is a 3D object generated by a 3D graphic tool. Here, the morphing may create a plurality of component shapes and include them in the morph target.

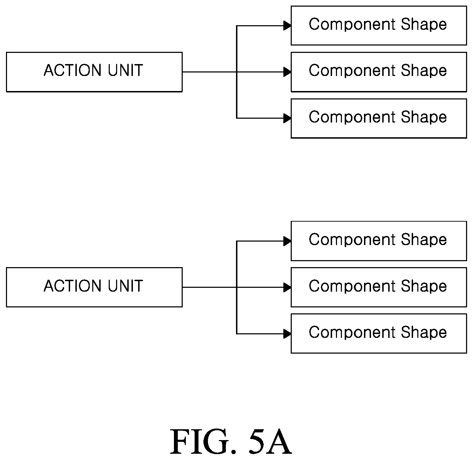

Specifically, referring to FIG. 5A, the control unit 350 generates a face model which expresses at least one action unit AU based on the FACS to generate a facial expression, and generates a plurality of component shapes which are obtained by dividing the action unit according to areas of respective facial muscles. In each component shape in a group of the component shapes generated in this manner, only a shape of one area in the original action unit can be expressed by morphing, and remaining areas do not change in a basic facial expression shape. If the morphing is applied to all the group of the generated component shapes at once, the original action unit can be expressed.

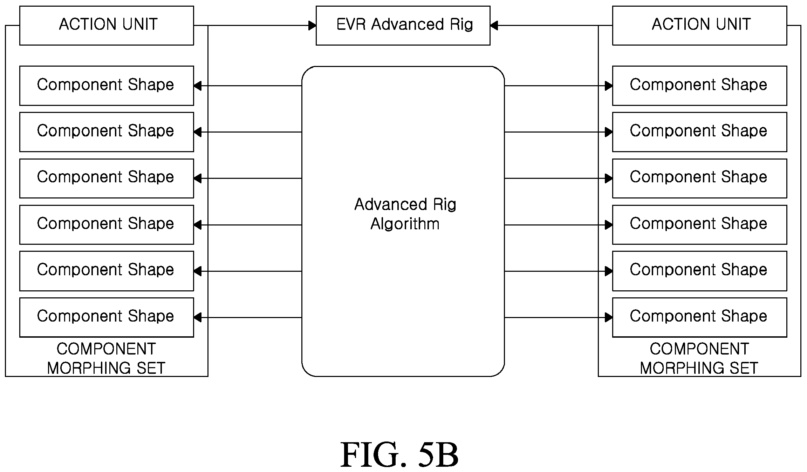

Referring to FIG. 5B, the control unit 350 may configure component morphing sets with the component shapes and morph two different action units.

Furthermore, when two or more different action units are expressed together, the component shapes corresponding to each action unit operate by morphing. Next, the control unit 350 may generate a new facial expression by morphing the component shapes corresponding to a first action unit and the component shapes corresponding to a second action unit.

At this time, when both the component shapes corresponding to the first action unit and the component shapes corresponding to the second action unit are morphed at 100% intensity, since a muscle contraction limit is exceeded in an area where facial muscles used in the two action units overlap and thus, an abnormal and inaccurate face shape comes out, morphing parameters of a component model corresponding to the area where the facial muscles overlap are adjusted to thereby generate a facial expression which is desired by a manufacturer. In existing methods, whenever two or more action units are morphed to compensate for an inaccurate face shape, corrective shapes to supplement this shape are newly manufactured one by one and additionally morphed to be used. As this can be solved by simply adjusting the parameters, the time required to manufacture corrective shapes can be reduced by several orders of magnitude.

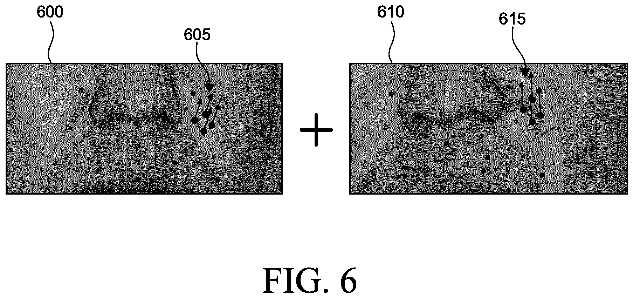

This will be described in detail with reference to FIG. 6.

First, referring to FIG. 6, a first component morphing set 600 corresponding to a first action unit and a second component morphing set 610 corresponding to a second action unit are provided.

The control unit 350 combines a first set of component shapes 605 corresponding to at least one component morphing of the first component morphing set 600 and a second set of component shapes 615 corresponding to at least one component morphing of the second component morphing set 610. At this time, points 605 and 615 correspond to facial muscle structures at the same location.

In this case, the control unit 350 applies a preset first weight value to a parameter of the first set of component shapes 605, and applies a preset second weight value to a parameter of the second set of component shapes 615. Next, the control unit 350 calculates a result value by calculating a value of the parameter to which the first weight value is applied and a value of the parameter to which the second weight value is applied. In this case, the calculated result value does not exceed a preset threshold result value in association with a new facial expression. Here, the threshold result value means a value set so that a result obtained by combining two or more action units does not exceed a contraction limit of facial muscles of the new facial expression and thus, an inaccurate appearance is not generated.

The control unit 350 may adjust the result value calculated by a first weight parameter value, which is the parameter to which the first weight value is applied, and a second weight parameter value, which is the parameter to which the second weight value is applied, so as not to exceed the threshold value. In this manner, in order to adjust at least one of the weight parameter values, the control unit 350 may determine a ratio for adjusting the weight parameter values based on a geometry regarding the first action unit and a geometry regarding the second action unit. For example, the control unit 350 may determine a ratio to which each of the first weight parameter value and the second weight parameter value is applied in consideration of a position, a movement range, a vector value and the like, of meshes constituting the geometry of each of the first action unit and the second action unit, and may apply each of a first weight vector and a second weight vector based on the determined ratio.

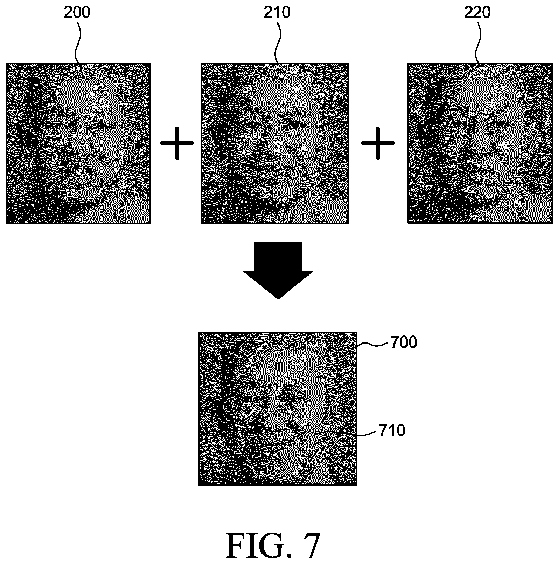

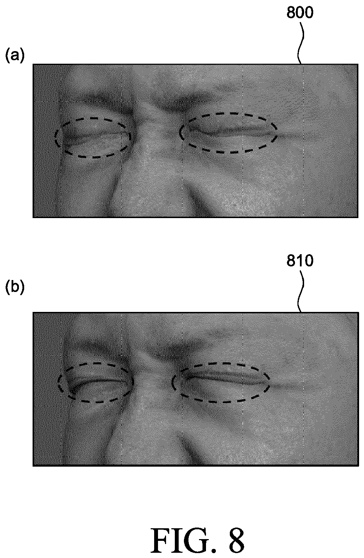

Hereinafter, result shapes of new facial expressions generated according to the present exemplary embodiment will be described with reference to FIGS. 7 and 8.

FIG. 7 and FIG. 8 are exemplary views illustrating result shapes generated by combining morphings corresponding to two or more action units according to an exemplary embodiment of the present disclosure.

Referring to FIG. 7, as described above with reference to FIG. 2, when a first component morphing set 200 corresponding to the first action unit, a second component morphing set 210 corresponding to the second action unit, and a third component morphing set 220 corresponding to the third action unit are combined, respective movement values of the first component morphing set 200, the second component morphing set 210, and the third component morphing set 220 are calculated, so that a result shape 700 of a new facial expression is formed.

Specifically, the control unit 350 generates the first component morphing set 200 corresponding to the first action unit, the second component morphing set 210 corresponding to the second action unit, and the third component morphing set 220 corresponding to the third action unit, and operates respective morphing parameters which belong to the first component morphing set 200, the second component morphing set 210 and the third component morphing set 220. In more detail, the control unit 350 applies a preset first weight value to a parameter value corresponding to at least a portion of a plurality of component morphings of the first component morphing set 200, applies a preset second weight value to a parameter value corresponding to at least a portion of the plurality of component morphings of the second component morphing set 210, and applies a preset third weight value to a parameter value corresponding to at least a portion of a plurality of component morphings of the third component morphing set 220. Subsequently, the control unit 350 forms the result shape 700 as a result of morphing using the parameter values of the component morphings to which the corresponding weight values are applied.

In the result shape 700 formed in this manner, as compared to the new facial expression 230 described in FIG. 2, in a portion corresponding to reference numeral 710 in FIG. 7, since the movement of the facial muscles that can be expressed in each morphing is not out of a range in which actual facial muscles may move, a facial expression which is natural and similar to an actual facial expression without interference of a geometric facial structure in each morphing appears.

Referring to FIG. 8, (a) of FIG. 8 shows a part of a result shape 800 as a result of morphing component shapes corresponding to two or more action units using an existing method, and (b) of FIG. 8 shows a part of a result shape 810 as a result of combining component morphings corresponding to two or more action units according to the present exemplary embodiment.

In the result shape 810 according to the present exemplary embodiment, as compared to the result shape 800 using the existing method, interference caused by a geometric structure in morphings between two or more action units is removed, so that expressions around eyes are expressed as being more natural and similar to real facial expressions.

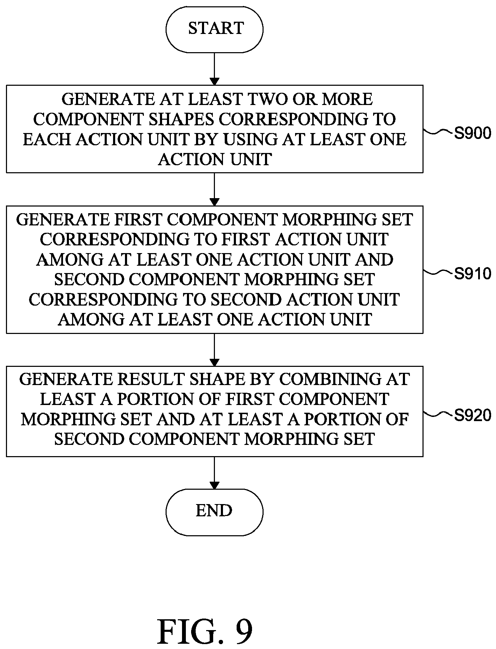

Hereinafter, a method of generating a facial expression according to the present exemplary embodiment will be described with reference to FIG. 9.

FIG. 9 is a flowchart illustrating a method of generating a facial expression according to an exemplary embodiment of the present disclosure. The following operations may be performed by the control unit 350 described above with reference to FIG. 1.

Referring to FIG. 9, the control unit 350 generates two or more component shapes corresponding to each action unit by using at least one action unit, in step S900, and generates a first component morphing set corresponding to a first action unit among the at least one action unit and a second component morphing set corresponding to a second action unit among the at least one action unit, in step 910. Here, each morphing includes a plurality of morphing units, and each morphing unit may have a mesh region composed of lines and vertices based on a human facial muscle structure.

Next, the control unit 350 generates a result shape by combining at least a portion of the first component morphing set and at least a portion of the second component morphing set, in step S920. The result shape may be formed by calculating movement values of each of the first component morphing set and the second component morphing set.

In order to generate a result shape by combining at least a portion of the first component morphing set and at least a portion of the second component morphing set, the control unit 350 may apply a preset first weight value to a parameter value corresponding to at least a portion of a plurality of component morphings of the first component morphing set 200, and apply a preset second weight value to a parameter value corresponding to at least a portion of a plurality of component morphings of the second component morphing set 210.

Subsequently, the control unit 350 forms a result shape as a result of morphings calculated by using the parameter values of component morphings to which the corresponding weight values are applied.

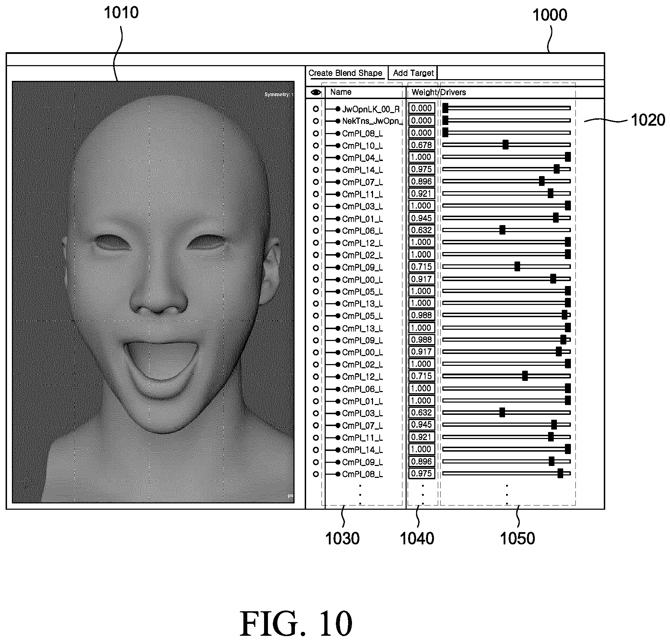

Hereinafter, an interface screen of a 3D graphic interface device for generating a result shape of a new facial expression by combining two or more component morphing sets will be described with reference to FIG. 10.

FIG. 10 is an exemplary diagram illustrating an interface screen of a 3D graphic interface device for generating a result shape of a new facial expression by combining two or more component morphing sets according to an exemplary embodiment of the present disclosure. In the presented exemplary embodiment, an interface screen may be displayed through the display unit 330 of the 3D graphic interface device 300.

Referring to FIG. 10, an interface screen 1000 for generating a result shape of a new facial expression by combining two or more component morphing sets is provided. The interface screen 1000 includes, together with a first graphic area 1010 which indicates a result shape as a result of combining two or more component morphing sets, a plurality of component morphings 1030 which correspond to each of action units, weight values 1040 which are applied to respective component morphings, and a second graphic area 1020 which indicates a graphic object 1050 capable of adjusting them.

The control unit 350 may combine at least a portion of the first component morphing set corresponding to the first action unit and at least a portion of the second component morphing set according to a request for combining two or more component morphing sets, and display a combined result shape in the first graphic area 1010. In combining, weight parameter values applied to respective component morphings may be displayed in the second graphic area 1020 as shown in FIG. 10.

The graphic object 1050 may be used to adjust the weight parameter values which are applied to respective component morphings. Here, the graphic object 1050 may be expressed in the form of a slide bar, but is not limited thereto.

When the weight parameter value is adjusted according to a user input, the control unit 350 may apply the adjusted weight parameter value to the parameter value corresponding to at least a portion of the plurality of component morphings of the first component morphing set, and display a result shape to which the weight parameter value is applied in the first graphic area 1010.

As such, in the present disclosure, by adjusting the weight parameter value in association with each morphing when two or more component morphing sets are combined, interference caused by geometric facial muscle structures in morphings between two or more action units is removed, so that a result shape can be expressed similarly to an actual facial expression.

An apparatus and a method according to an exemplary embodiment of the present disclosure may be implemented in the form of program instructions that can be executed through various computer means and recorded in a computer readable medium. The computer readable medium may include program instructions, data files, data structures, and the like, alone or in combination.

The program instructions recorded on the computer readable medium may be those specially designed and configured for the present disclosure, or may be those known and available to a person having ordinary skill in the computer software field. Examples of the computer readable recording medium include magnetic media such as hard disks, floppy disks and magnetic tapes, optical media such as CD-ROMs and DVDs, magneto-optical media such as floptical disks, and hardware devices specially configured to store and execute program instructions, such as ROMs, RAMs, flash memories, and the like. Examples of program instructions include not only machine language codes such as those generated by a compiler, but also include high-level language codes that can be executed by a computer using an interpreter or the like.

The hardware devices described above may be configured to operate as one or more software modules to perform operations of the present disclosure, and vice versa.

Although the exemplary embodiments of the present disclosure have been described in detail with reference to the accompanying drawings, it is to be understood that the present disclosure is not limited to those exemplary embodiments and various changes and modifications may be made without departing from the scope of the present disclosure. Therefore, the exemplary embodiments disclosed in the present disclosure are intended to illustrate rather than limit the scope of the present disclosure, and the scope of the technical idea of the present disclosure is not limited by these exemplary embodiments. Therefore, it should be understood that the above-described exemplary embodiments are illustrative in all aspects and not restrictive. The scope of the present disclosure should be construed according to the claims, and all technical ideas in the scope of equivalents should be construed as falling within the scope of the present disclosure.

## Claims

1. A method of generating a facial expression, comprising:
generating two or more component shapes corresponding to each action unit by using at least one action unit;
generating a first component morphing set corresponding to a first action unit among the at least one action unit and a second component morphing set corresponding to a second action unit among the at least one action unit; and
generating a result shape by combining at least a portion of the first component morphing set and at least a portion of the second component morphing set;
wherein each of the first component morphing set and the second component morphing set includes two or more generated component shapes.

2. The method of claim 1, wherein each component morphing set has a plurality of mesh regions composed of lines and vertices based on a human facial muscle structure.

3. The method of claim 2, wherein the generating of the result shape is combining a first set of component shapes corresponding to at least one component morphing of the first component morphing set and a second set of component shapes corresponding to at least one component morphing of the second component morphing set,
wherein the combining of the first set of component shapes and the second set of component shapes includes,
applying a preset first weight value to a parameter value of the first set of component shapes;
applying a preset second weight value to a parameter value of the second set of component shapes; and
calculating a result value by calculating a first weight parameter value that is the parameter value to which the first weight value is applied and a second weight parameter value that is the parameter value to which the second weight value is applied.

4. The method of claim 3, wherein the generating of the result shape includes,
adjusting the calculated result value so as not to exceed a preset threshold value.

5. The method of claim 4, wherein the adjusting of the calculated result value so as not to exceed the threshold value includes:
determining a ratio for adjusting the first weight parameter value based on a geometry regarding the first action unit;
determining a ratio for adjusting the second weight parameter value based on a geometry regarding the second action unit; and
adjusting each of the first weight parameter value and the second weight parameter value based on the determined ratio.

6. The method of claim 5, wherein the determining of the ratio includes:
determining the first weight parameter value in consideration of at least one of a movement, a movement range, and a vector value of meshes constituting the geometry of the first action unit; and
determining a ratio to which each of the second weight parameter values is applied in consideration of at least one of a movement, a movement range, and a vector value of meshes constituting the geometry of the second action unit.

7. A three-dimensional (3D) graphic interface device (300) for generating a facial expression, comprising:
a storage unit (340) configured to store at least one face model; and
a control unit (350) configured to be connected to the storage unit (340) and generate a facial expression,
wherein the control unit (350) is configured to,
generate at least two or more component shapes corresponding to each action unit by using at least one action unit,
generate a first component morphing set (600) corresponding to a first action unit among the at least one action unit and a second component morphing set (610) corresponding to a second action unit among the at least one action unit, and
generate a result shape by combining at least a portion of the first component morphing set (600) and at least a portion of the second component morphing set (610),
wherein each of the first component morphing set (600) and the second component morphing set (610) includes two or more generated component shapes.

8. The 3D graphic interface device (300) of claim 7, wherein each component morphing has a plurality of mesh regions composed of lines and vertices based on a human facial muscle structure.

9. The 3D graphic interface device (300) of claim 8, wherein the control unit (350) is configured to combine a first set of component shapes corresponding to at least one component morphing of the first component morphing set (600) and a second set of component shapes corresponding to at least one component morphing of the second component morphing set (610),
wherein the control unit (350) is configured to calculate a result value by applying a preset first weight value to a parameter value of the first set of component shapes, applying a preset second weight value to a parameter value of the second set of component shapes, and calculating a first weight parameter value that is the parameter value to which the first weight value is applied and a second weight parameter value that is the parameter value to which the second weight value is applied, in order to combine the first set of component shapes and the second set of component shapes.

10. The 3D graphic interface device (300) of claim 9, wherein the control unit (350) is configured to adjust the calculated result value so as not to exceed a preset threshold value.

11. The 3D graphic interface device (300) of claim 10, wherein the control unit (350) is configured to,
determine a ratio for adjusting the first weight parameter value based on a geometry regarding the first action unit;
determine a ratio for adjusting the second weight parameter value based on a geometry regarding the second action unit; and
adjust each of the first weight parameter value and the second weight parameter value based on the determined ratio.

12. The 3D graphic interface device (300) of claim 10, wherein the control unit (350) is configured to,
determine a ratio to which the first weight parameter value is applied in consideration of at least one of a movement, a movement range, and a vector value of meshes constituting the geometry of the first action unit, and
determine a ratio to which the second weight parameter value is applied in consideration of at least one of a movement, a movement range, and a vector value of meshes constituting the geometry of the second action unit.
